Europäisches Patentamt

European Patent Office

Office européen des brevets

(11) Publication number: **0 306 817**

**A2**

## EUROPEAN PATENT APPLICATION

(21) Application number: 88114197.2

(51) Int. Cl.⁴: **G11B 5/00 , G11B 5/024**

(22) Date of filing: 31.08.88

(30) Priority: 09.09.87 JP 223902/87

(43) Date of publication of application:
**15.03.89 Bulletin 89/11**

(84) Designated Contracting States:
**DE GB**

(71) Applicant: **HITACHI, LTD.**
**6, Kanda Surugadai 4-chome**
**Chiyoda-ku Tokyo 101(JP)**

(72) Inventor: **Yatsugi, Tomishige**
**2-30, Taiseicho**
**Katsuta-shi(JP)**
Inventor: **Ohtsuka, Susumu**
**1422-4,Tabiko**
**Katsuta-shi(JP)**

(74) Representative: **Altenburg, Udo, Dipl.-Phys. et al**
**Patent- und Rechtsanwälte**
**Bardehle-Pagenberg-Dost-Altenburg**
**Frohwitter-Geissler & Partner Galileiplatz 1**
**Postfach 86 06 20**
**D-8000 München 86(DE)**

(54) **Magnetic recording and reproducing apparatus of rotating head type.**

(57) The present invention relates to a drive circuit for a rotating erase head (1) used in magnetic recording and reproducing apparatus of rotating head type. Resonance capacitance (8) is added in parallel across terminals (4, 4) of a stationary winding of a rotating transformer (3) for transferring an erase signal to said rotating erase head (1). The resonance capacitance (8) causes parallel resonance at an erase signal frequency (fe) in conjunction with an inductance component (Lr) obtained when the rotating erase head (1) is seen through the rotating transformer (3). Since a parallel resonance current ($i_r$) thus flows through the rotating erase head (1), a very large erase current ($i_e$) as compared with a drive current ($i_d$) supplied by a drive circuit (6) can be obtained. Since the resonance capacitance (8) can be disposed within the drive circuit (6), it can be mounted very simply and the space can be efficiently used. In addition, there is no cost up of a rotating cylinder (2) on which the rotating erase head (1) is disposed at all.

FIG. 4

## MAGNETIC RECORDING AND REPRODUCING APPARATUS OF ROTATING HEAD TYPE

BACKGROUND OF THE INVENTION

The present invention relates to a magnetic recording and reproducing apparatus of rotating head type, and in particular to a drive circuit of a rotating erase head used in a home video tape recorder.

A first conventional technique relating to a drive circuit of a rotating erase head used in a home video tape recorder is described in JP-A-58-60406. In the first conventional technique, a luminance FM signal to be used originally as a recording signal is directly let flow through a rotating erase head without especially resonating the rotating erase head with the drive circuit.

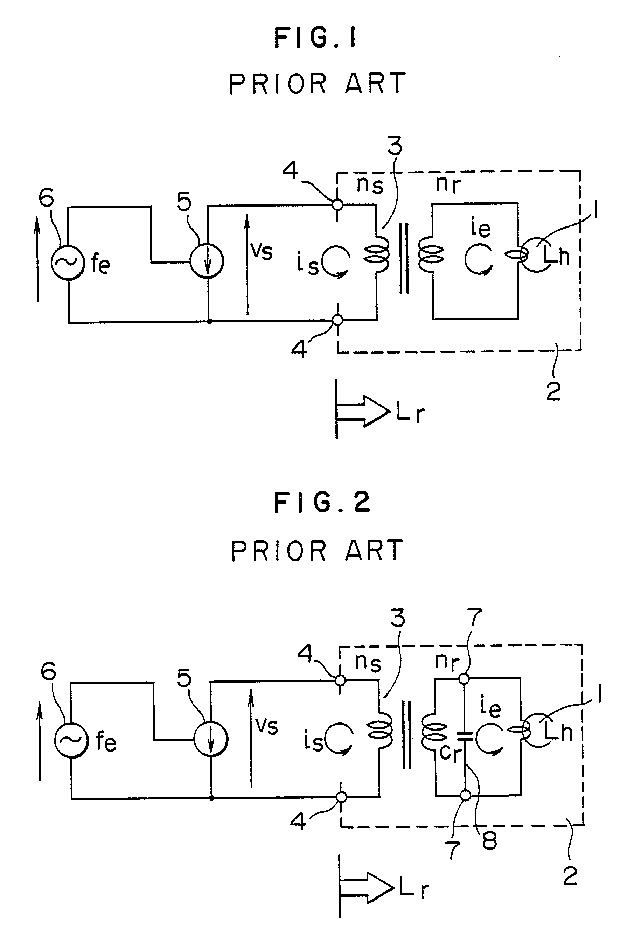

Fig. 1 is a circuit configuration diagram showing the operation of the first conventional technique.

In Fig. 1, numeral 1 denotes a rotating erase head, 2 a rotating cylinder, 3 a rotating transformer, 4 terminals of a stationary side of the rotating transformer, 5 a current source driver, and 6 an erase signal oscillation source. Further in Fig. 1, symbol Lh denotes inductance of the rotary erasing head, $i_e$ an erase current, $i_s$ a current of the stationary side of the rotating transformer, $n_s$ the number of turns of the stationary winding of the rotating transformer 3, $n_r$ the number of turns of a rotary winding of the rotating transformer 3, Vs voltage across the stationary side of the rotating transformer 3, fe an erase signal frequency, and Lr an inductance component obtained when the rotating erase head 1 is seen from terminals 4.

In Fig. 1, the erase signal having the frequency fe generated by the erase signal source 6 is transferred to the voltage-controlled current source 5 to undergo current amplification and is directly supplied to the rotating head 3.

In a second conventional technique, resonance capacitance Cr 8 which causes resonation at the erase signal frequency fe is disposed across terminals 7 where the rotaty side of the rotating transformer 3 is connected to the rotating erase head 1 as shown in Fig. 2. In Fig. 2, the same numerals or symbols as those of Fig. 1 denote identical components.

In the above described conventional technique, power dissipated in the drive circuit is not considered, and a large current exceeding the video recording current is needed when the erase head is driven, resulting in a problem. When the above described second conventional technique of disposing resonance capacitance across the rotating erase head is used, the method and space for mounting the capacitance to provide the rotary portion with capacitance pose a problem, and the cost of the rotating cylinder is largely increased, resulting in another problem.

SUMMARY OF THE INVENTION

A principal object of the present invention is to provide a drive circuit for rotating erase head providing a sufficiently large erase current and dissipating very small amount of power.

Another object of the present invention is to provide a drive circuit for rotating erase head which can be mounted in the same package as that of the video recording current drive circuit and which makes it possible to efficiently use the space and economize in space.

A further object of the present invention is to provide a drive circuit for rotating erase head which does not cause an increase in cost of the rotating cylinder at all.

The above described objects are achieved by adding resonance capacitance in parallel across terminals of the stationary winding of the rotating transformer for transferring the erasing signal to the rotating erase head.

In accordance with the present invention, the resonance capacitance provided on the stationary side of the rotating transformer causes parallel resonance at the erase signal frequency in conjunction with the inductance component obtained when the erase head is seen through the rotating transformer. Thereby, a parallel resonance current flows through the erase head. It is thus possible to obtain a very large erase current as compared with the drive current supplied by the drive circuit. Since the resonance capacitance can be disposed within the drive circuit, its mounting becomes very simple and the space can be used efficiently. In addition, there is no cost up of the rotating cylinder at all.

## BRIEF DESCRIPTION OF THE DRAWINGS

Preferred embodiments of the present invention will now be described in conjunction with the accompanying drawings, in which:

Figs. 1 and 2 are circuit configuration diagrams showing the operation of the prior art;

Fig. 3 is an oblique view of a rotating erase head and a recording and reproducing circuit of a magnetic recording and reproducing apparatus of rotating head type according to the present invention;

Fig. 4 is a circuit configuration diagram showing the operation of the present invention; and

Fig. 5 is a circuit diagram of an embodiment of the present invention.

## DESCRIPTION OF THE PREFERRED EMBODIMENTS

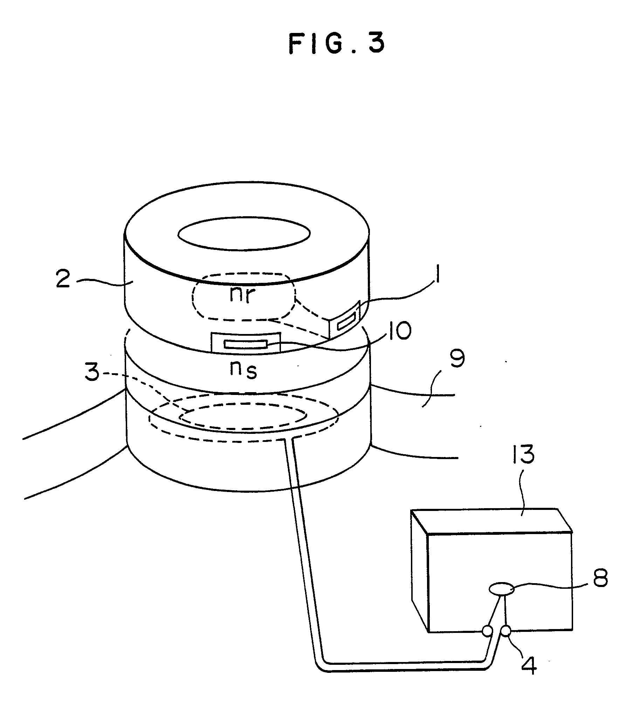

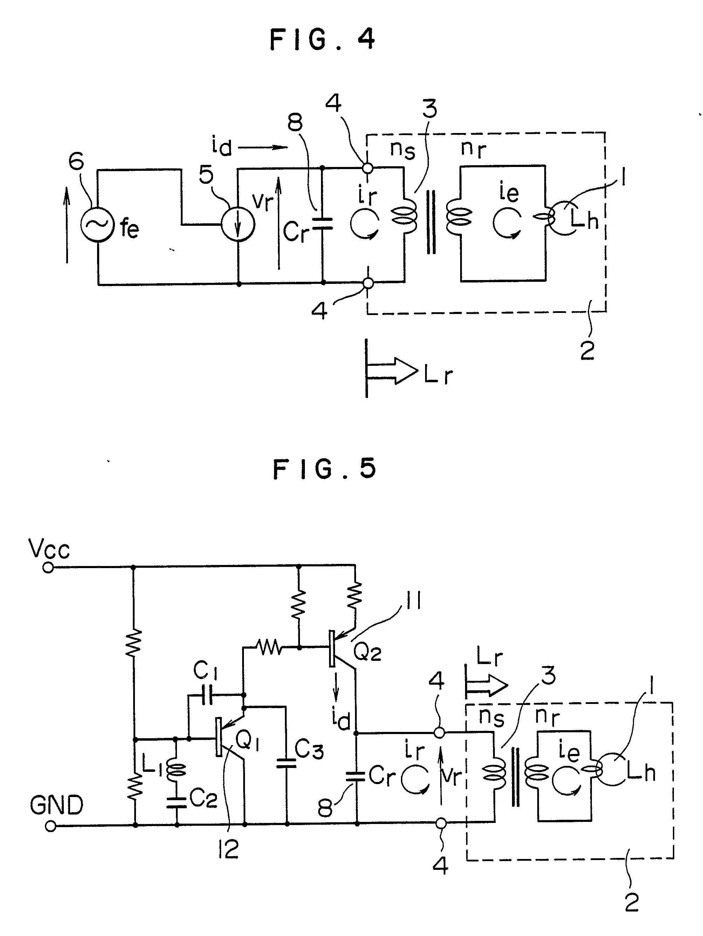

An embodiment of the present invention will now be described by referring to Figs. 3 and 4. In Figs. 3 and 4, numeral 1 denotes a rotating erase head, 2 denotes a rotating cylinder, 3 a rotating transformer, 4 terminals of a stationary side of the rotating transformer, 5 a current source driver, 6 an erase signal oscillation source, 8 a resonance capacitance Cr, 9 a magnetic tape, 10 a video head, and 13 a recording and reproducing circuit.

In Figs. 3 and 4, the rotating erase head 1 is disposed on the rotating cylinder 2, the rotating transformer 3 is disposed between the rotating cylinder 2 and the recording and reproducing circuit 13, and the current source driver 5 and the erase signal generation source 6 included in the drive circuit of the rotating erase head 1 are disposed in the recording and reproducing circuit 13.

Further in Fig. 4, symbol Lh denotes inductance of the rotating erase head 1, $i_e$ an erase current, $i_r$ a resonance current, $n_s$ the number of turns of the stationary winding, $n_r$ the number of turns of the rotary winding of the rotating transformer 3, Cr the capacitance value of the resonance capacitor 8, Vr resonance voltage, fe erase signal frequency, and Lr an inductance component obtained when the rotating erase head 1 is seen from the terminals 4.

First of all, the operation of the entire circuit of Fig. 4 will now be described. An erase signal having the frequency fe generated by the erase signal source 6 is transferred to the voltage-controlled current source 5 to undergo current amplification, a drive current for the resonance circuit being obtained. The drive current generated by the current source 5 excites the resonance circuit comprising the capacitor Cr and the inductance Lr to produce the resonance voltage Vr and the resonance current $i_r$. Further, the resonance current $i_r$ is transferred to the rotating erase head 1 via the rotating transformer 3 having a turn ratio of $n_s:n_r$.

The value of the resonance capacitor Cr 8 will now be described. An optimum value in a magnetic recording and reproducing apparatus adopting the circuit of the present invention from the view point of the system is typically chosen as the erase signal frequency fe. Succeedingly, the head inductance Lh, the number of turns $n_s$ of the stationary side of the rotating transformer 3, the number of turns $n_r$ of the rotary side of the rotating transformer 3 are defined from magnetic performance. The erase voltage Vr of the stationary side obtained when the rotating erase head 1 is supplied with a sufficient erase current is so chosen to be a value which can be generated with the power supply voltage of the current source driver 5. Therefore, the value Cr of the resonance capacitor 8 is defined by equation (2) below.

$$fe = \frac{1}{2\pi\sqrt{Lr \cdot Cr}} \qquad (1)$$

From the equation (1), there results

$$Cr = \frac{1}{4\pi^2 fe^2 \cdot Lr} \qquad (2)$$

The inductance Lr including the inductance of the rotating transformer 3 is nearly defined by equation (3) shown below.

3

$$Lr \simeq (\frac{n_s}{n_r})^2 \cdot Lh \qquad (3)$$

When the turn ratio $n_s/n_r$ is chosen to be unity causing the minimum transmission loss, the resonance point for the head inductance Lh and the resonance capacitor Cr may be so chosen as to coincide with the erase signal frequency fe.

A circuit obtained when the present invention is actually applied to a home video tape recorder will now be described by referring to Fig. 5. In Fig. 4, numeral 1 denotes a rotating erase head, 8 resonance capacitance, 11 a current driver, and 12 an oscillation source. In the circuit of Fig. 5, $L_1$, $C_1$ and $C_3$ are components for defining the erase signal frequency fe, and the erase signal frequency fe corresponding to the oscillation frequency of the oscillation source 12 is defined by equation (4) below.

$$fe = \frac{1}{2\pi}\sqrt{\frac{C_1+C_3}{L_1 \cdot C_1 \cdot C_3}} \qquad (4)$$

In the present embodiment, the erase signal frequency fe has been chosen to be 10 MHz. Other symbols denote the same components as those of Fig. 4. Respective values are represented as $n_s$ = $n_r$ = 1, Lh = 1.8 $\mu$H and Cr = 150 pF. In the circuit of the present embodiment shown in Fig. 5, voltage close to twice Vcc can be generated as the erase voltage Vr. In response to the generated erase voltage Vr, a resonance current $i_r$ nearly represented as equation (5) flows.

$$|i_r| = |\frac{Vr}{2\pi fe \cdot Lr}| \qquad (5)$$

Further at the rotary side of the rotating transformer 3, an erase current $i_e$ equivalent to the resonance current minus the transmission loss can be obtained. On the other hand, the higher the quality factor Q of a resonance circuit comprising the inductance Lr and the resonance capacitance Cr becomes, the smaller the exciting current $i_d$ supplied by the current driver 11 may be. In the present embodiment shown in Fig. 5, Q is approximately 10. With a current equivalent to approximately one tenth as low as the obtained resonance current $i_r$, therefore, a sufficient erase current $i_e$ can be obtained. A drive circuit for rotating erase head dissipating very low power can thus be realized. Since the driver transistor 11 for the resonance capacitance 8 comprises electronic components similar to those of the oscillation source 12, they can be simply housed into an identical small package, resulting in a drive circuit economized in space.

The present invention makes it unnecessary to dispose an electric component such as a capacitor on the rotary side of the rotating cylinder. This results in excellent effects that the reliability of the rotating cylinder is improved and the cost can be reduced.

Further, the dissipated power can be largely reduced as compared with a drive circuit which does not use a resonance circuit. Since the resonance capacitor can be incorporated into the drive circuit, there is little cost up of the rotating cylinder caused by addition per se of a capacitor, resulting in an excellent effect.

## Claims

1. A magnetic recording and reproducing apparatus of rotating head type having a rotating erase head (1) on a rotating cylinder (2), a rotating transformer (3) between the rotating cylinder (2) and a recording and reproducing circuit (13), and a drive circuit (5) for said rotating erase head (1) within said recording and reproducing circuit (13), characterized in that resonance capacitance Cr having such a value as to cause parallel resonance at an erase signal frequency fe in conjunction with an inductance component Lr obtained when the stationary side of said rotating transformer (3) is seen from said drive circuit (5) is disposed across terminals (4,4) where the stationary side of said rotating transformer (3) is connected to said drive circuit (5).

2. A magnetic recording and reproducing apparatus of rotating head type having a rotating erase head (1) on a rotating cylinder (2), a rotating transformer (3) between the rotating cylinder (2) and a recording and reproducing circuit (13), and a drive circuit (5) for said rotating erase head (1) within said recording and reproducing circuit (13), characterized in that resonance capacitance Cr having such a value as to cause parallel resonance at an erase signal frequency fe in conjunction with an inductance component Lr obtained when the stationary side of said rotating transformer (3) is seen from said drive circuit (5) is disposed across terminals (4,4) where the stationary side of said rotating transformer (3) is connected said drive circuit (5), and said resonance capacitance Cr is given by

$$Cr = \frac{1}{4\pi^2 fe^2 \cdot Lr} \ .$$

3. A magnetic recording and reproducing apparatus of rotating head type according to Claim 2, characterized in that assuming that the number of turns of the stationary winding of said rotating transformer (3), the number of turns of the rotary winding of said rotating transformer (3), and inductance of said rotating erase head (1) are respectively $n_s$, $n_r$ and Lh, the inductance component Lr obtained when the stationary side of said rotating transformer (3) is seen is given by

$$Lr \simeq (\frac{n_s}{n_r})^2 \cdot Lh \ .$$

4. A magnetic recording and reproducing apparatus of rotating head type according to Claim 2, characterized in that assuming that erase voltage is Vr, a resonance current $i_r$ flowing through the stationary side of said rotating transformer (3) under the state of parallel resonance is given by

$$|i_r| = |\frac{Vr}{2\pi fe \cdot Lr}| \ .$$

# FIG.1
## PRIOR ART

# FIG.2
## PRIOR ART

# FIG. 3

# FIG. 4

# FIG. 5